# EUROPÄISCHE PATENTANMELDUNG

(11) **EP 2 631 305 A1**
(43) Veröffentlichungstag der Anmeldung: **28.08.2013**
(21) Anmeldenummer: 12175534.2
(22) Anmeldetag: 09.07.2012
(51) Int. Cl.: C21B 13/00, C21B 13/14, C21B 13/02

(54) **Verbund von Wirbelschichtreduktionsverfahren und Direktreduktionsverfahren**

(71) Anmelder: Siemens VAI Metals Technologies GmbH, 4031 Linz (AT)
(72) Erfinder: Heckmann, Hado, 4020 Linz (AT); Millner, Robert, 3382 Loosdorf (AT); Rosenfellner, Gerald, 3352 Ertl (AT)
(74) Vertreter: Maier, Daniel Oliver

(57) **Zusammenfassung**

Die Erfindung betrifft ein Verfahren zur Reduktion von Eisenoxidträgermaterial, wobei ein erstes feinteilchenförmiges Eisenoxidträgermaterial (3) einer Reduktion mittels eines ersten Reduktionsgases in einem Wirbelschichtreduktionsverfahren unterzogen wird, und ein stückiges Eisenoxidträgermaterial (24) einer Reduktion mittels eines zweiten Reduktionsgases zu einem Eisenschwamm in einem Festbett-Direktreduktionsverfahren unterzogen wird. Es ist dadurch gekennzeichnet, dass das stückige Eisenoxidträgermaterial durch Klassierung aus einem Eisenoxidträgerausgangsmaterial (22) abgetrennt wird, und bei dieser Klassierung anfallendes zweites feinteilchenförmiges Eisenoxidträgermaterial als zumindest Teilmenge des ersten feinteilchenförmigen Eisenoxidträgermaterials (3) verwendet wird. Sie betrifft auch eine Vorrichtung zur Durchführung des Verfahrens.

## Beschreibung

### Gebiet der Technik

Die Erfindung betrifft ein Verfahren zur Reduktion von Eisenoxidträgermaterial, wobei ein erstes feinteilchenförmiges Eisenoxidträgermaterial einer Reduktion mittels eines ersten Reduktionsgases in einem Wirbelschichtreduktionsverfahren unterzogen wird, und ein stückiges Eisenoxidträgermaterial einer Reduktion mittels eines zweiten Reduktionsgases zu einem Eisenschwamm in einem Festbett-Direktreduktionsverfahren unterzogen wird,

### Stand der Technik

Bei Verbindung eines Schmelzreduktionsprozesses zur Erzeugung von flüssigem Roheisen, wie beispielsweise dem COREX^{®}-Prozess, mit einem Direktreduktionsverfahren zur Erzeugung von Eisenschwamm können die im Schmelzreduktionsverfahren zusätzlich zu flüssigem Roheisen anfallenden Mengen von Gas mit Reduktionskraft nach CO2-Entfernung für Reduktionszwecke genutzt werden. Die Verbindung einer COREX^{®}-Anlage mit einer Direktreduktionsanlage stellt daher ein besonders wirtschaftliches Kombinationsverfahren zur Herstellung von nicht durch stahlschädigende Komponenten verunreinigtes Eisen - sogenanntes Virgin Iron - für die Stahlindustrie dar.

Zur Erzielung einer hohen Metallisierung des Eisenschwammes - Verhältnis Fe(metallisch)/Fe(total) - ist bei einem Festbett-Direktreduktionsverfahren eine gleichmäßig gute Durchgasung des Direktreduktionsschachtes zu gewährleisten. Daher setzt der Betrieb des Direktreduktionsschachtes eine hohe Gaspermeabilität seiner Festbett-Füllung voraus. Dies wiederum bedingt, dass zur Direktreduktion verwendetes Eisenoxidträgermaterial vor dem Einsatz im Direktreduktionsschacht gesiebt werden muss; Unterkorn dieser Klassierung durch Siebung, - feinteilchenförmiges Eisenoxidträgermaterial mit einer Korngröße von unter 6 mm bei Pellets beziehungsweise unter 10 mm bei Stückerz - sollte aufgrund der Durchgasungsproblematik nur begrenzt in dem Festbett-Direktreduktionsverfahren eingesetzt werden. Einsatzmaterial unterhalb von 3,15 mm - Pellets und Stückerz - darf nicht eingesetzt werden.

Ebenso wie der Direktreduktionsschacht funktioniert der Reduktionsschacht einer COREX^{®}-Anlage auf Basis stückiger oxidischer Eisenträger. Es besteht daher keine Möglichkeit, das Unterkorn einer - vor dem Einsatz im Direktreduktionsschacht innerhalb einer COREX^{®}-DR-Verbundanlage stattfindenden - Klassierung - insbesondere Siebung - zur Abtrennung von stückigen oxidischen Eisenträgern aus Eisenoxidträgermaterial zu verwenden. Eine Sinteranlage zur Stückigmachung des Unterkorns steht dort in der Regel nicht zur Verfügung. Das Unterkorn muss daher verkauft oder deponiert werden.

### Zusammenfassung der Erfindung

### Technische Aufgabe

Die Aufgabe der vorliegenden Erfindung besteht darin, ein Verfahren und eine Vorrichtung bereitzustellen, die eine wirtschaftliche Nutzung des Unterkorns unter Reduktion des Eisenoxidträgermaterials ermöglichen.

### Technische Lösung

Diese Aufgabe wird gelöst durch ein
Verfahren zur Reduktion von Eisenoxidträgermaterial, wobei
- ein erstes feinteilchenförmiges Eisenoxidträgermaterial einer Reduktion mittels eines ersten Reduktionsgases in einem Wirbelschichtreduktionsverfahren unterzogen wird,
- ein stückiges Eisenoxidträgermaterial einer Reduktion mittels eines zweiten Reduktionsgases zu einem Eisenschwamm in einem Festbett-Direktreduktionsverfahren unterzogen wird,
dadurch gekennzeichnet, dass
das stückige Eisenoxidträgermaterial durch Klassierung, insbesondere Siebung, aus einem Eisenoxidträgerausgangsmaterial abgetrennt wird,
und bei dieser Klassierung, insbesondere Siebung,
und/oder bei einer gegebenenfalls nachfolgenden Zerkleinerung,
anfallendes zweites feinteilchenförmiges Eisenoxidträgermaterial als zumindest Teilmenge des ersten feinteilchenförmigen Eisenoxidträgermaterials verwendet wird.

Unter feinteilchenförmigem Eisenoxidträgermaterial ist Eisenoxidträgermaterial mit einer Korngröße von < 6 mm zu verstehen.
Unter stückigem Eisenoxidträgermaterial ist Eisenoxidträgermaterial mit einer Korngröße von ≥ 6 mm, bevorzugt >10 mm zu verstehen.
Der Mengenanteil des feinteilchenförmigen Eisenoxidträgermaterial unterhalb von 150 µm sollte möglichst klein sein, damit einerseits die Verluste durch Austrag des feinteilchenförmigen Eisenoxidträgermaterial aus dem letzten Wirbelschichtreaktor des Wirbelschichtreaktionsverfahrens nicht zu hoch werden, und andererseits die Beladungsgrenze im Gasstrom des Offgases zu den Zyklonen nicht überschritten wird. Die Korngröße beschreibt die Größe einzelner Partikel in einem Gemenge. Die Korngröße ist durch Siebmaschenweite definiert bspw. gemäß der Norm DIN66165. Eine Korngrößenverteilung beschreibt den Mengenanteil an Partikeln einer bestimmten Korngröße oder innerhalb eines bestimmten Korngrößenbereiches.
Feinteilchenförmiges Eisenoxidträgermaterial, stückiges Eisenoxidträgermaterial, Eisenoxidträgerausgangsmaterial sind alle Eisenoxidträgermaterial.

Der durch die Klassierung vom stückigen Eisenoxidträgermaterial abgetrennte Rest des Eisenoxidträgerausgangsmaterials ist feinteilchenförmiges Eisenoxidträgermaterial, oder wird durch eine gegebenenfalls auf die Klassierung folgende Zerkleinerung zu feinteilchenförmigem Eisenoxidträgermaterial - es handelt sich dabei um aus dem Eisenoxidträgermaterial gewonnenes sogenanntes zweites feinteilchenförmiges Eisenoxidträgermaterial. Unter Klassierung ist Auftrennung nach Korngrößenfraktionen zu verstehen. Klassierungsarten sind beispielsweise Siebung, Sichtung, Zyklonierung.

Das erste feinteilchenförmige Eisenoxidträgermaterial wird im Wirbelschichtreduktionsverfahren einer zumindest teilweisen Reduktion mittels des ersten Reduktionsgases unterzogen. Vorzugsweise ist der Grad der Metallisierung des in dem Wirbelschichtreduktionsverfahren erhaltenen feinteilchenförmigen Wirbelschichtreduktionsproduktes zumindest 35%

### Vorteilhafte Wirkungen der Erfindung

Bei dem erfindungsgemäßen Verfahren wird ausgenutzt, dass die Korngröße des im Wirbelschichtreduktionsverfahren eingesetzten Eisenoxidträgermaterials geringer ist als die Korngröße des im Festbett-Direktreduktionsverfahren eingesetzten Eisenoxidträgermaterials. Das Eisenoxidträgerausgangsmaterial - beispielsweise Stückerz oder Pellets - wird vor Einsatz im Festbett-Direktreduktionsverfahren einer Klassierung, insbesondere einer Siebung, unterzogen. Das Überkorn der Klassierung + # wird im Festbett-Direktreduktionsverfahren genutzt, während das Unterkorn der Klassierung - # im Wirbelschichtreduktionsverfahren genutzt wird. Sofern das Unterkorn der Klassierung - # noch Fraktionen enthält, welche für den unmittelbaren Einsatz im Wirbelschichtreduktionsverfahren zu grob sind, kann eine Zerkleinerung, beispielsweise in einem Brecher oder einer Mühle durchgeführt werden, um für den Einsatz im Wirbelschichtreduktionsverfahren geeignetes feinteilchenförmiges Eisenoxidträgermaterial herzustellen.

Vorteilhafterweise wird zumindest ein Teil des in dem Wirbelschichtreduktionsverfahren erhaltenen feinteilchenförmigen Wirbelschicht-reduktionsproduktes einer Endreduktion und Aufschmelzen zu flüssigem Roheisen unterzogen.
Auf diese Weise kann ein vollständig metallisiertes Produkt - flüssiges Roheisen - aus dem Wirbelschichtreduktionsprodukt erzeugt werden.
Unter Teil ist dabei eine Teilmenge zu verstehen. Teilmenge ist zu verstehen als nicht das gesamte in dem Wirbelschichtreduktionsverfahren erhaltene feinteilchenförmige Wirbelschichtreduktionsprodukt.

Nach einer Variante des erfindungsgemäßen Verfahrens wird zumindest ein Teil des in dem Wirbelschichtreduktionsverfahren erhaltenen feinteilchenförmigen Wirbelschichtreduktionsproduktes einer Kompaktierung zu einem Kompaktierungsprodukt unterzogen. Dadurch wird es leichter handhabbar. Beispielsweise kann das Kompaktierungsprodukt das Produkt einer Heißkompaktierung sein. Unter Teil ist dabei eine Teilmenge zu verstehen. Teilmenge ist zu verstehen als nicht das gesamte in dem Wirbelschichtreduktionsverfahren erhaltene feinteilchenförmige Wirbelschichtreduktionsprodukt.

Nach einer weiteren Variante wird zumindest ein Teil des Kompaktierungsproduktes einer Endreduktion und Aufschmelzen zu flüssigem Roheisen unterzogen. Unter Teil ist dabei eine Teilmenge zu verstehen. Teilmenge ist zu verstehen als nicht das gesamte bei der Kompaktierung erhaltene Kompaktierungsprodukt.
Nach einer anderen Variante wird zumindest ein Teil des Kompaktierungsproduktes als stückiges Eisenoxidträgermaterial dem Festbett-Direktreduktionsverfahren zugeführt. Unter Teil ist dabei eine Teilmenge zu verstehen. Teilmenge ist zu verstehen als nicht das gesamte bei der Kompaktierung erhaltene Kompaktierungsprodukt. Dadurch kann erreicht werden, dass der Grad der Metallisierung des Eisenschwammes erhöht wird. Da das im Wirbelschichtreduktionsverfahren erhaltene feinteilchenförmige Wirbelschichtreduktionsprodukt und entsprechend das daraus gewonnene Kompaktierungsprodukt Kohlenstoff enthalten, kann auf diese Weise dem Eisenschwamm auch etwas Kohlenstoff zugeführt werden.

Nach einer bevorzugten Ausführungsform des erfindungsgemäßen Verfahrens wird der Eisenschwamm einer Klassierung, insbesondere Siebung, unterzogen, und zumindest eine Teilmenge eines bei dieser Klassierung, insbesondere Siebung, und/oder bei einer gegebenenfalls nachfolgenden Zerkleinerung, anfallenden dritten feinteilchenförmigen Eisenoxidträgermaterials
als Teilmenge des ersten feinteilchenförmigen Eisenoxidträgermaterials verwendet. Diese Variante ist dann besonders bevorzugt, wenn das dritte feinteilchenförmige Eisenoxidträgermaterial eine geringere Metallisierung aufweist als das bei der Reduktion des ersten feinteilchenförmigen Eisenoxidträgermaterials mittels des ersten Reduktionsgases in einem Wirbelschichtreduktionsverfahren erhaltene Produkt,

Nach einer anderen bevorzugten Ausführungsform des erfindungsgemäßen wird der Eisenschwamm einer Klassierung, insbesondere Siebung, unterzogen,
und der Eisenschwamm
und/oder zumindest eine Teilmenge eines bei dieser Klassierung, insbesondere Siebung, und/oder bei einer gegebenenfalls nachfolgenden Zerkleinerung, anfallenden dritten feinteilchenförmigen Eisenoxidträgermaterials,
gegebenenfalls zusammen mit
dem Wirbelschichtreduktionsprodukt
und/oder Kompaktierungsprodukt,
einer Endreduktion und Aufschmelzen zu flüssigem Roheisen unterzogen.

Eine durch die Klassierung vom Eisenschwamm abgetrennte Fraktion ist feinteilchenförmiges Eisenoxidträgermaterial, oder wird durch eine gegebenenfalls auf die Klassierung folgende Zerkleinerung zu feinteilchenförmigem Eisenoxidträgermaterial - es handelt sich dabei um aus dem Eisenschwamm gewonnenes sogenanntes drittes feinteilchenförmiges Eisenoxidträgermaterial..

Mitunter wird nur Überkorn einer Siebung des Eisenschwamms als Stahlvorprodukt verwendet, das Unterkorn jedoch als sogenanntes Remet erneut im Festbett-Direktreduktionsverfahren eingesetzt. Hierdurch wird die Kapazität der Direktreduktionsanlage zur Durchführung des Festbett-Direktreduktionsverfahrens vermindert.
Durch die beiden voranstehenden erfindungsgemäßen Ausführungsformen wird solches Unterkorn im Wirbelschichtreduktionsverfahren genutzt oder beispielsweise in einen Einschmelzvergaser einer FINEX®-Anlage chargiert. Eine solche FINEX®-Aniage weist in der Regel zwischen ihren Wirbelschichtreduktionszonen und Einschmelzvergaser eine Heißkompaktierungseinheit zur Überführung des feinteilchenförmigen Wirbelschichtreduktionsproduktes in stückige Partikel auf. In eine solche Einrichtung lässt sich dass Unterkorn der Siebung des Eisenschwammes besonders vorteilhaft zuführen. Durch eine erfindungsgemäße Zufuhr dieses Unterkorns kann der Einschmelzvergasers von betrieblichen Schwankungen des Wirbelschichtreduktionsverfahrens entkoppelt und damit besonders stabil gefahren werden.
Nach einer Ausführungsform des erfindungsgemäßen Verfahrens wird das dritte feinteilchenförmige Eisenoxidträgermaterial kompaktiert, bevor es der Endreduktion und Aufschmelzen zu flüssigem Roheisen unterzogen wird.

Durch die beiden voranstehenden erfindungsgemäßen Ausführungsformen kann der Grad der Metallisierung des in dem Wirbelschichtreduktionsverfahren erhaltenen feinteilchenförmigen Wirbelschichtreduktionsproduktes verändert werden; und/oder es kann der Grad der Metallisierung eines Materialgemisches umfassend eine oder mehrere der Komponenten
- Eisenschwamm,
- bei der Klassierung, insbesondere Siebung, des Eisenschwammes, und/oder bei einer gegebenenfalls nachfolgenden Zerkleinerung, anfallendes drittes feinteilchenförmiges Eisenoxidträgermaterial,
- Wirbelschichtreduktionsprodukt,
- Kompaktierungsprodukt,
verändert werden.

Dies ist insbesondere bei Schmelzreduktlonsprozessen, welche eine Wirbelschichtreduktionszone beinhalten - beispielsweise FINEX® - vorteilhaft, da hier der Grad der Metallisierung sich hier auf einem ohnedies deutlich niedrigerem Niveau einstellt als bei Vorliegen einer Reduktionszone in Form eines Reduktionsschachtes - beispielsweise COREX®. Beispielsweise können die vorreduzierten Eisenträger aus der Reduktionszone einer FINEX®-Anlage mit einem durchschnittlichen Grad der Metallisierung von etwa 50% bei Abfall des Grades der Metallisierung auf 45% durch Einsatz von etwa 11 Massen% drittem feinteilchenförmigen Eisenoxidträgermaterial mit einem Grad der Metallisierung von etwa 90% als Teilmenge des ersten feinteilchenförmigen Materials wieder auf 50% Grad der Metallisierung für das in den Einschmelzvergaser zu chargierende Material gebracht werden. Auf diese Weise wird auch der CO₂-Gehalt des Generatorgases gesenkt, da für im Einschmelzvergaser weniger Endreduktionsarbeit geleistet werden muss, die zur Entstehung von CO₂ führt.

Der erfindungsgemäße Verbund eines Wirbelschichtreduktionsverfahrens mit einem Festbett-Direktreduktionsverfahren ermöglicht die Verarbeitung von in feinteilchenförmigen Eisenoxidträgermaterialien aus dem Eisenoxidträgerausgangsmaterial oder dem Eisenschwamm, die in COREX®-DR-Verbundanlagen nach dem Stand der Technik auch anfallen, aber nicht Anlagen-intern nutzbar sind. Dadurch wird die Netto-Kapazität der Direktreduktionsan!age zur Durchführung des Festbett-Direktreduktionsverfahrens erhöht und entsprechend die Gesamtwirtschaftlichkeit im Vergleich zu einer COREX®-DR-Verbundanlagen erhöht. Der bisher diskutierte Verbund eines Wirbelschichtreduktionsverfahrens mit einem Festbett-Direktreduktionsverfahren besteht bezüglich des Stoffstromes fester Einsatzstoffe.

Der Verbund des Wirbelschichtreduktionsverfahrens mit einem Festbett-Direktreduktionsverfahren kann auch gasseitig hergestellt werden.

Nach einer bevorzugten Ausführungsform des erfindungsgemäßen Verfahrens wird das erste Reduktionsgas aus einem bei Endreduktion und Aufschmelzen des Wirbelschichtreduktionsproduktes und/oder des Kompaktierungsproduktes und/oder des Eisenschwammes und/oder zumindest einer Teilmenge des, gegebenenfalls kompaktierten, dritten feinteilchenförmigen Eisenoxidträgermaterials zu flüssigem Roheisen in einem Einschmelzvergaser hergestelltem Generatorgas hergestellt. Das Generatorgas wird dabei durch Vergasung von Kohlenstoffträgern mit Sauerstoff hergestellt.

Nach einer anderen Ausführungsform des erfindungsgemäßen Verfahrens wird das zweite Reduktionsgas hergestellt unter Nutzung eines bei dem
Wirbelschichtreduktionsverfahren anfallenden Offgases. Unter Offgas ist dabei das Gas zu verstehen, dass nach Leistung von Reduktionsarbeit im Wirbelschichtverfahren aus den Anlagenteilen zur Durchführung des Wirbelschichtverfahrens abgezogen wird.

Nach einer anderen Ausführungsform des erfindungsgemäßen Verfahrens wird das zweite Reduktionsgas hergestellt unter Nutzung eines bei dem Festbett-Direktreduktionsverfahren anfallenden Topgases. Unter Topgas ist dabei das Gas zu verstehen, dass nach Leistung von Reduktionsarbeit im Festbett-Direktreduktionsverfahren aus dem Anlagenteil zur Durchführung des Festbett-Direktreduktionsverfahrens abgezogen wird.

Nach einer anderen Ausführungsform des erfindungsgemäßen Verfahrens wird das zweite Reduktionsgas hergestellt unter Nutzung einer Teilmenge des Generatorgases.

Das zweite Reduktionsgas kann auch
- unter Nutzung von Offgas und von Topgas,
- unter Nutzung von Offgas und von Generatorgas,
- unter Nutzung von Topgas und von Generatorgas, oder
- unter Nutzung von Offgas und von Topgas und von Generatorgas
hergestellt werden.

Ein weiterer Gegenstand der vorliegenden Erfindung ist eine
Vorrichtung zur Durchführung des erfindungsgemäßen Verfahrens,
umfassend eine Wirbelschichtreduktionsvorrichtung,
eine Zugabevorrichtung zur Zugabe von erstem feinteilchenförmigem Eisenoxidträgermaterial in die Wirbelschichtreduktionsvorrichtung,

eine erste Reduktionsgaszugabeleitung zur Zugabe eines ersten Reduktionsgases in die Wirbelschichtreduktionsvorrichtung,
eine Festbett-Direktreduktionsvorrichtung,
eine zweite Reduktionsgaszugabeleitung zur Zugabe eines zweiten Reduktionsgases in die Festbett-Direktreduktionsvorrichtung,

eine Klassierungsvorrichtung zur Klassierung von Eisenoxidträgerausgangsmaterial, gegebenenfalls eine Zerkleinerungsvorrichtung zur Zerkleinerung von aus der Klassierungsvorrichtung nach Klassierung entnommenem Eisenoxidträgermaterial,
eine Zugabevorrichtung zur Zugabe von bei der Klassierung erhaltenem stückigem Eisenoxidträgermaterial in die Festbett-Direktreduktionsvorrichtung,
sowie eine Zufuhrvorrichtung zur Zufuhr von bei der Klassierung und/oder bei der Zerkleinerung anfallendem zweitem feinteilchenförmigem Eisenoxidträgermaterial in die Zugabevorrichtung zur Zugabe von erstem feinteilchenförmigem Eisenoxidträgermaterial und/oder in die Wirbelschichtreduktionsvorrichtung.

Die Klassierungsvorrichtung ist beispielsweise eine Siebvorrichtung, eine Sichtungsvorrichtung, ein Zyklon.

Vorteilhafterweise umfasst die erfindungsgemäße Vorrichtung auch eine Vorrichtung zu Endreduktion und Aufschmelzen zu flüssigem Roheisen zumindest eines Teiles des in dem Wirbelschichtreduktionsverfahren erhaltenen feinteilchenförmigen Wirbelschichtreduktionsproduktes.
In so einem Fall ist auch eine Einrichtung zur Zufuhr von in dem Wirbelschichtreduktionsverfahren erhaltenen feinteilchenförmigen Wirbelschichtreduktionsprodukt in die Vorrichtung zu Endreduktion und Aufschmelzen zu flüssigem Roheisen zumindest eines Teiles des in dem Wirbelschichtreduktionsverfahren erhaltenen feinteilchenförmigen Wirbelschichtreduktionsproduktes vorhanden.
Auf diese Weise kann ein vollständig metallisiertes Produkt - flüssiges Roheisen - aus dem Wirbelschichtreduktionsprodukt erzeugt werden.

Nach einer Variante umfasst die erfindungsgemäße Vorrichtung eine Kompaktierungsvorrichtung zur Kompaktierung zumindest eines Teiles des in dem Wirbelschichtreduktionsverfahren erhaltenen feinteilchenförmigen Wirbelschichtreduktionsproduktes zu einem Kompaktierungsprodukt.

Dadurch wird es leichter handhabbar. Beispielsweise kann die Kompaktierungsvorrichtung eine Heißkompaktierungsvorrichtung sein. Bei der Kompaktierung kann es sich beispielsweise um eine Brikettierung handeln. Bei der Kompaktierung kann es sich beispielsweise um eine Sonderform der Brikettierung handeln, bei der die Formmulden beider Walzen gegeneinander versetzt sind, dergestalt dass die resultierenden Formlinge längs der Naht eine assymetrische Form aufweisen. Hierdurch wird eine Zerkleinerung der Schülpen begünstigt.

Nach einer weiteren Variante umfasst die erfindungsgemäße Vorrichtung eine Vorrichtung zu Endreduktion und Aufschmelzen zu flüssigem Roheisen zumindest eines Teiles des Kompaktierungsproduktes.
In so einem Fall ist auch eine Einrichtung zur Zufuhr von Kompaktierungsprodukt in die Vorrichtung zu Endreduktion und Aufschmelzen zu flüssigem Roheisen zumindest eines Teiles des Kompaktierungsproduktes vorhanden.

Nach einer anderen Variante wird umfasst die erfindungsgemäße Vorrichtung eine Zufuhrvorrichtung zur Zufuhr von Kompaktierungsprodukt in die Zugabevorrichtung zur Zugabe von bei der Klassierung erhaltenem stückigem Eisenoxidträgermaterial in die Festbett-Direktreduktionsvorrichtung
und/oder
die Festbett-Direktreduktionsvorrichtung.

Nach einer bevorzugten Ausführungsform umfasst die erfindungsgemäße Vorrichtung eine
Vorrichtung zur Klassierung des aus der Festbett-Direktreduktionsvorrichtung erhaltenen Eisenschwammes,
sowie gegebenenfalls eine Zerkleinerungsvorrichtung zur Zerkleinerung von aus der Vorrichtung zur Klassierung nach Klassierung entnommenem Eisenschwamm,
sowie eine Zufuhrvorrichtung zur Zufuhr von bei der Klassierung und/oder bei der Zerkleinerung anfallendem drittem feinteilchenförmigen Eisenoxidträgermaterial in die Zugabevorrichtung von erstem feinteilchenförmigem Eisenoxidträgermaterial und/oder in die Wirbelschichtreduktionsvorrichtung.

Die Vorrichtung zur Klassierung ist beispielsweise eine Siebvorrichtung, eine Sichtungsvorrichtung, ein Zyklon.

Nach einer anderen bevorzugten Ausführungsform
umfasst die erfindungsgemäße Vorrichtung eine Zugabevorrichtung zur Zugabe von Eisenschwamm in die
Vorrichtung zu Endreduktion und Aufschmelzen zu flüssigem Roheisen zumindest eines Teiles des in dem Wirbelschichtreduktionsverfahren erhaltenen feinteilchenförmigen Wirbelschichtreduktionsproduktes.
und/oder in die
Vorrichtung zu Endreduktion und Aufschmelzen zu flüssigem Roheisen
zumindest eines Teiles des Kompaktierungsproduktes.

Nach einer anderen bevorzugten Ausführungsform
umfasst die erfindungsgemäße Vorrichtung eine Vorrichtung zur Klassierung des aus der Festbett-Direktreduktionsvorrichtung erhaltenen Eisenschwammes,
sowie gegebenenfalls eine Zerkleinerungsvorrichtung zur Zerkleinerung von aus der Vorrichtung zur Klassierung nach Klassierung entnommenem Eisenschwamm,
und eine Zugabevorrichtung zur Zugabe von zumindest einer Teilmenge des bei der Klassierung und/oder der gegebenenfalls nachfolgenden Zerkleinerung, anfallenden dritten feinteilchenförmigen Eisenoxidträgermaterials
in die
Vorrichtung zu Endreduktion und Aufschmelzen zu flüssigem Roheisen zumindest eines Teiles des in dem Wirbelschichtreduktionsverfahren erhaltenen feinteilchenförmigen Wirbelschichtreduktionsproduktes
und/oder in die
Vorrichtung zu Endreduktion und Aufschmelzen zu flüssigem Roheisen
zumindest eines Teiles des Kompaktierungsproduktes.

Nach einer Ausführungsform
mündet die Zugabevorrichtung
zur Zugabe von zumindest einer Teilmenge

des bei der Klassierung und/oder der gegebenenfalls nachfolgenden Zerkleinerung anfallenden

dritten feinteilchenförmigen Eisenoxidträgermaterials
in die Vorrichtung zu Endreduktion und Aufschmelzen zu flüssigem Roheisen zumindest eines Teiles des in dem Wirbelschichtreduktionsverfahren erhaltenen feinteilchenförmigen Wirbelschichtreduktionsproduktes
und/oder in die
Vorrichtung zu Endreduktion und Aufschmelzen zu flüssigem Roheisen
zumindest eines Teiles des Kompaktierungsproduktes

in eine
Einrichtung zur Zufuhr von in dem Wirbelschichtreduktionsverfahren erhaltenen feinteilchenförmigen Wirbelschichtreduktionsprodukt in die Vorrichtung zu Endreduktion und Aufschmelzen zu flüssigem Roheisen zumindest eines Teiles des in dem Wirbelschichtreduktionsverfahren erhaltenen feinteilchenförmigen Wirbelschichtreduktionsproduktes,
und/oder
in eine Einrichtung zur Zufuhr von Kompaktierungsprodukt in die Vorrichtung zu Endreduktion und Aufschmelzen zu flüssigem Roheisen zumindest eines Teiles des Kompaktierungsproduktes.

Nach einer bevorzugten Ausführungsform umfasst die erfindungsgemäße Vorrichtung eine von der
Vorrichtung zu Endreduktion und Aufschmelzen zu flüssigem Roheisen
zumindest eines Teiles des in dem Wirbelschichtreduktionsverfahren erhaltenen feinteilchenförmigen Wirbelschichtreduktionsproduktes.
und/oder der
Vorrichtung zu Endreduktion und Aufschmelzen zu flüssigem Roheisen
zumindest eines Teiles des Kompaktierungsproduktes
ausgehende Generatorgasleitung zum Abzug von bei Endreduktion und Aufschmelzen hergestellten Generatorgas.

Nach einer weiteren Ausführungsform umfasst die erfindungsgemäße Vorrichtung eine von der Wirbelschichtreduktionsvorrichtung ausgehende Offgasleitung zum Abziehen von bei Wirbelschichtreduktion anfallendem Offgas.

Nach einer weiteren Ausführungsform umfasst die erfindungsgemäße Vorrichtung eine von der Festbett-Direktreduktionsvorrichtung ausgehende Topgasleitung zum Abziehen von bei Festbett-Direktreduktion anfallendem Topgas.

Nach einer anderen bevorzugten Ausführungsform
sind die
Vorrichtung zu Endreduktion und Aufschmelzen zu flüssigem Roheisen
zumindest eines Teiles des in dem Wirbelschichtreduktionsverfahren erhaltenen feinteilchenförmigen Wirbelschichtreduktionsproduktes
und die
Vorrichtung zu Endreduktion und Aufschmelzen zu flüssigem Roheisen
zumindest eines Teiles des Kompaktierungsproduktes
die selbe Vorrichtung zu Endreduktion und Aufschmelzen zu flüssigem Roheisen. Beispielsweise handelt es sich um einen Einschmelzvergaser.

Ein weiterer Gegenstand der Erfindung ist Stahlvorprodukt oder Stahl, gewonnen durch Weiterverarbeitung aus einem Produkt des erfindungsgemäßen Verfahrens.

### Kurze Beschreibung der Zeichnungen

Nachfolgend wird die Erfindung anhand beispielhafter schematischer Figuren von Ausführungsformen erläutert.
Figur 1 zeigt schematisch einen Verbund einer Wirbelschichtreduktionsvorrichtung.
Figur 2 zeigt schematisch einen Verbund einer Wirbelschichtreduktionsvorrichtung, bei dem zweites feinteilchenförmiges Eisenoxidträgermaterial als Teilmenge des ersten feinteilchenförmigen Eisenoxidträgermaterials verwendet wird.

### Beschreibung der Ausführungsformen

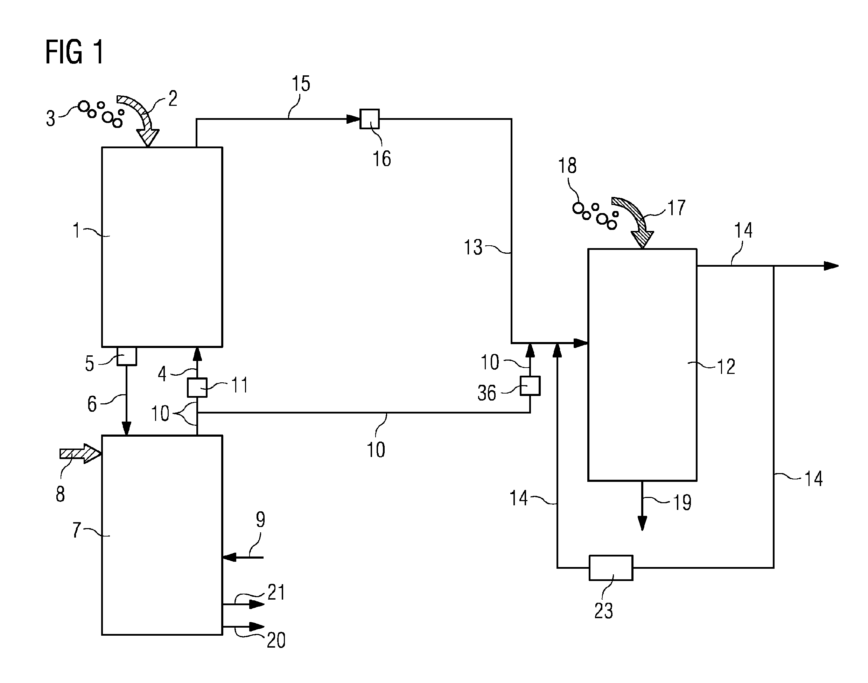

Figur 1 zeigt schematisch eine Wirbelschichtreduktionsvorrichtung 1, in die über eine nicht detailliert dargestellte Zugabevorrichtung 2 ein erstes feinteilchenförmiges Eisenoxidträgermaterial 3 zugegeben wird. Eine erste Reduktionsgaszugabeleitung 4 dient zur Zugabe eines ersten Reduktionsgases in die Wirbelschichtreduktionsvorrichtung 1. Bei dem in der Wirbelschichtreduktionsvorrichtung durchgeführten Wirbelschichtreduktionsverfahren erhaltenes feinteilchenförmiges Wirbelschichtreduktionsprodukt wird mittels Kompaktierungsvorrichtung 5 kompaktiert, im dargestellten Fall heißkompaktiert, und zwar brikettiert. Das Kompaktierungsprodukt Brikett wird über die Einrichtung 6 zur Zufuhr von Kompaktierungsprodukt in die Vorrichtung zu Endreduktion und Aufschmelzen zu flüssigem Roheisen, in diesem Fall ein Einschmelzvergaser 7, eingeleitet. In dem Einschmelzvergaser wird unter Vergasung von Kohlenstoffträgern 8 mittels Sauerstoff 9 bei Endreduktion und Aufschmelzen ein Generatorgas hergestellt. Über die Generatorgasleitung 10 wird das Generatorgas aus dem Einschmelzvergaser 7 abgezogen und nach Behandlungsschritten wie beispielsweise Entstaubung und Kühlung - schematisch dargestellt durch eine Behandlungsvorrichtung 11- zur Herstellung des ersten Reduktionsgases genutzt.
Die in Figur 1 dargestellte Vorrichtung zeigt auch eine Festbett-Direktreduktionsvorrichtung 12. In diese mündet eine zweite Reduktionsgaszugabeleitung 13 zur Zugabe eines zweiten Reduktionsgases in die Festbett-Direktreduktionsvorrichtung 12. Eine von der Festbett-Direktreduktionsvorrichtung 12 ausgehende Topgasleitung 14 dient zum Abziehen von bei Festbett-Direktreduktion anfallendem Topgas.
Eine von der Wirbelschichtreduktionsvorrichtung 1 ausgehende Offgasleitung 15 dient zum Abziehen von bei Wirbelschichtreduktion anfallendem Offgas. Das zweite Reduktionsgas wird unter Nutzung des Offgases hergestellt. Das Offgas wird dazu Behandlungsschritten unterzogen, was durch eine Offgasbehandlungsvorrichtung 16 dargestellt ist.
Das zweite Reduktionsgas wird hergestellt auch unter Nutzung einer Teilmenge des Generatorgases. Das Generatorgas wird dazu Behandlungsschritten unterzogen, was durch eine Generatorgasbehandlungsvorrichtung 36 in einem Zweig der Generatorgasleitung 10 dargestellt ist.
Das zweite Reduktionsgas wird hergestellt auch unter Nutzung des bei dem Festbett-Direktreduktionsverfahren anfallenden Topgases. Das Topgas wird dazu Behandlungsschritten unterzogen, was durch eine Topgasbehandlungsvorrichtung 23 in einem Zweig der Topgasleitung 14 dargestellt ist.
Weitere bei der Herstellung des zweiten Reduktionsgases gegebenenfalls erfolgende Behandlungsschritte und Vorrichtungen dazu sind der Übersichtlichkeit halber nicht dargestellt.
Über eine Zugabevorrichtung 17 wird stückiges Eisenoxidträgermaterial 18 in die Festbett-Direktreduktionsvorrichtung 12 eingegeben. In der Festbett-Direktreduktionsvorrichtung 12 hergestellter Eisenschwamm wird über eine Eisenschwamm-Entnahmevorrichtung 19 aus der Festbett-Direktreduktionsvorrichtung 12 entnommen.
In dem Einschmelzvergaser 7 bei Endreduktion und Aufschmelzen zu flüssigem Roheisen entstehendes flüssiges Roheisen und Schlacke werden über schematisch dargestellte Roheisenentnahmevorrichtungen 20 und Schlackeentnahmevorrichtungen 21 aus dem Einschmelzvergaser 7 entnommen.
Die Wirbelschichtreduktionsvorrichtung 1 kann mehrere in Reihe geschaltete Wirbelschichtreaktoren umfassen. Hierdurch wird einerseits ein höherer Grad der Metallisierung des feinteilchenförmigen Wirbelschichtreduktionsproduktes und andererseits eine bessere Ausnutzung des ersten Reduktionsgases erzielt. Hierbei ist jeweils das aus einem vorausgehenden Wirbelschichtreaktors austretendes Gas das Reduktionsgas des folgenden Wirbelschichtreaktors. Feinteilchenförmiges Eisenoxidträgermaterial durchläuft das System von Reaktoren im Gegenstrom zum ersten Reduktionsgas.

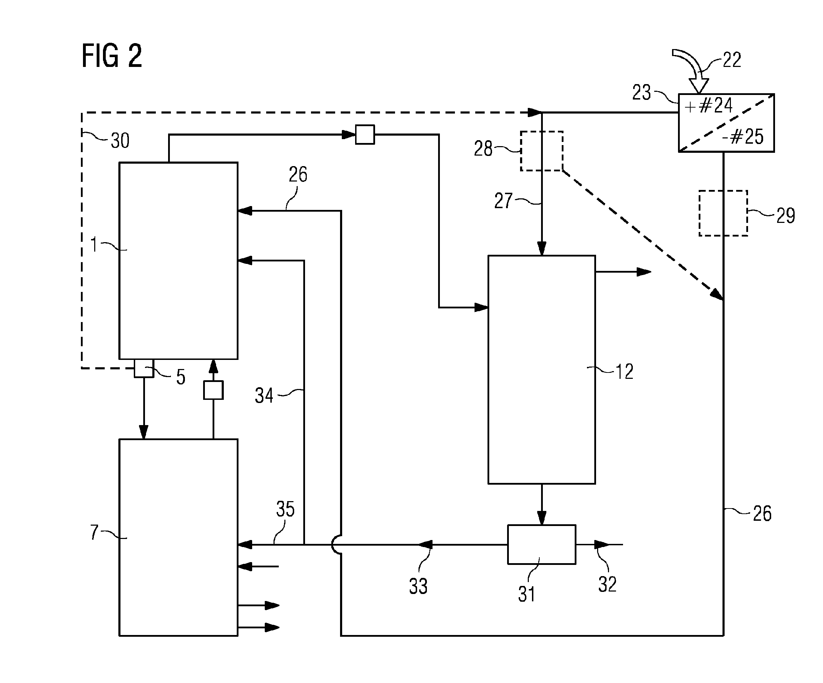

Figur 2 zeigt einen erfindungsgemäßen Verbund einer Schmelzreduktionsanlage und einer Direktreduktionsanlage mit einer Vorrichtung in einer zu Figur 1 weitgehend analogen Darstellung. Auf die Diskussion von mit gleichen Bezugszeichen wie in Figur 1 versehenen Teilen wird aus Gründen der Übersichtlichkeit verzichtet.
Aus einem Eisenoxidträgerausgangsmaterial 22 wird durch Klassierung, hier Siebung, mittels einer Klassierungsvorrichtung zur Klassierung von
Eisenoxidträgerausgangsmaterial, hier einer Siebvorrichtung 23, stückiges Eisenoxidträgermaterial + # 24 und zweites feinteilchenförmiges Eisenoxidträgermaterial - # 25 voneinander getrennt. Das dabei anfallende zweites feinteilchenförmige Eisenoxidträgermaterial - # 25 wird als Teilmenge des ersten feinteilchenförmigen Eisenoxidträgermaterials verwendet, indem es über eine Zufuhrvorrichtung 26 zur Zufuhr von bei der Klassierung anfallendem zweitem feinteilchenförmigem Eisenoxidträgermaterial -# 25 in die die Wirbelschichtreduktionsvorrichtung 1 eingegeben wird. Über eine Zugabevorrichtung 27 zur Zugabe von bei der Klassierung erhaltenem stückigem Eisenoxidträgermaterial + # 24 in die Festbett-Direktreduktionsvorrichtung 12, hier einem Direktreduktionsschacht, wird das stückige Material diesem zugegeben. Optional kann in der Zufuhrvorrichtung 26 oder in der Zugabevorrichtung 27 - oder in der Siebvorrichtung 23, nicht extra dargestellt - eine Zerkleinerungsvorrichtung 28,29 zur Zerkleinerung von aus der Klassierungsvorrichtung nach Klassierung entnommenem Eisenoxidträgermaterial vorhanden sein. Bei einer solchen Zerkleinerung erhaltenes Eisenoxidträgermaterial kann dann auch als zweites feinteilchenförmiges Eisenoxidträgermaterial -# 25 genutzt werden, dargestellt durch einen von der Zerkleinerungsvorrichtung 28 ausgehenden strichlierten Pfeil zur Zufuhrvorrichtung 26. Die erfindungsgemäße Vorrichtung umfasst optional eine Zufuhrvorrichtung 30 zur Zufuhr von Kompaktierungsprodukt in die Zugabevorrichtung 27 zur Zugabe von bei der Klassierung erhaltenem stückigem Eisenoxidträgermaterial in die Festbett-Direktreduktionsvorrichtung und/oder die Festbett-Direktreduktionsvorrichtung.

Figur 2 zeigt auch eine Vorrichtung 31 zur Klassierung des aus der Festbett-Direktreduktionsvorrichtung erhaltenen Eisenschwammes, hier eine Siebvorrichtung. Aus dieser Siebvorrichtung wird eine stückige Fraktion 32 des Eisenschwammes entnommen. Die anfallende feinteilchenförmige Fraktion des Eisenschwammes wird als drittes feinteilchenförmiges Eisenoxidträgermaterial 33 über eine Zufuhrvorrichtung 34 zur Zufuhr in die Wirbelschichtreduktionsvorrichtung 1 in diese eingeführt. Ebenso ist eine Zugabevorrichtung 35 zur Zugabe von drittem feinteilchenförmigem Eisenoxidträgermaterial 33 in den Einschmelzvergaser 7 vorhanden.

Der erfindungsgemäß unter Anderem vorgeschlagene FINEX®-DR-Verbund ermöglicht die Verarbeitung einer Anlagen-intern ansonsten nicht nutzbaren Feinfraktion von Eisenoxidträgermaterial durch Transfer in eine FINEX®-Anlage. Ebenso kann auch das Unterkorn des Eisenschwamms aus der Direktreduktion in der FINEX®-Anlage zur Roheisenerzeugung genutzt werden, wodurch sich die Netto-Kapazität der Direktreduktionsan!age erhöht. Hierdurch wird die Gesamtwirtschaftlichkeit erhöht

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Wirbelschichtreduktionsvorrichtung
- 2: Zugabevorrichtung
- 3: erstes feinteilchenförmiges Eisenoxidträgermaterial
- 4: erste Reduktionsgaszugabeleitung
- 5: Kompaktierungsvorrichtung
- 6: Einrichtung zur Zufuhr von Kompaktierungsprodukt in die Vorrichtung zu Endreduktion und Aufschmelzen zu flüssigem Roheisen
- 7: Einschmelzvergaser
- 8: Kohlenstoffträger
- 9: Sauerstoff
- 10: Generatorgasleitung
- 11: Behandlungsvorrichtung
- 12: Festbett-Direktreduktionsvorrichtung
- 13: zweite Reduktionsgaszugabeleitung
- 14: Topgasleitung
- 15: Offgasleitung
- 16: Offgasbehandlungsvorrichtung
- 17: Zugabevorrichtung
- 18: Eisenoxidträgermaterial
- 19: Eisenschwamm-Entnahmevorrichtung
- 20: Roheisenentnahmevorrichtung
- 21: Schlackenentnahmevorrichtung
- 22: Eisenoxidträgerausgangsmaterial
- 23: Siebvorrichtung
- 24: stückiges Eisenoxidträgermaterial + #
- 25: feinteilchenförmiges Eisenoxidträgermaterial - #
- 26: Zufuhrvorrichtung zur Zufuhr von bei der Klassierung anfallendem zweitem feinteilchenförmigem Eisenoxidträgermaterial -# 25 in die die Wirbelschichtreduktionsvorrichtung 1
- 27: Zugabevorrichtung zur Zugabe von bei der Klassierung erhaltenem stückigem Eisenoxidträgermaterial in die Festbett-Direktreduktionsvorrichtung und/oder die Festbett-Direktreduktionsvorrichtung
- 28: Zerkleinerungsvorrichtung
- 29: Zerkleinerungsvorrichtung
- 30: Zufuhrvorrichtung zur Zufuhr von Kompaktierungsprodukt in die Zugabevorrichtung 27
- 31: Vorrichtung zur Klassierung des aus der Festbett-Direktreduktionsvorrichtung erhaltenen Eisenschwammes
- 32: stückige Fraktion des Eisenschwammes
- 33: drittes feinteilchenförmiges Eisenoxidträgermaterial
- 34: Zufuhrvorrichtung zur Zufuhr in die Wirbelschichtreduktionsvorrichtung 1
- 35: Zugabevorrichtung zur Zugabe von drittem feinteilchenförmigem Eisenoxidträgermaterial 33 in den Einschmelzvergaser 7
- 36: Generatorgasbehandlungsvorrichtung

## Patentansprüche

1. Verfahren zur Reduktion von Eisenoxidträgermaterial, wobei
- ein erstes feinteilchenförmiges Eisenoxidträgermaterial (3) einer Reduktion mittels eines ersten Reduktionsgases in einem Wirbelschichtreduktionsverfahren unterzogen wird,
- ein stückiges Eisenoxidträgermaterial (24) einer Reduktion mittels eines zweiten Reduktionsgases zu einem Eisenschwamm in einem Festbett-Direktreduktionsverfahren unterzogen wird,
**dadurch gekennzeichnet, dass**
das stückige Eisenoxidträgermaterial (24) durch Klassierung, insbesondere Siebung, aus einem Eisenoxidträgerausgangsmaterial (22) abgetrennt wird,
und bei dieser Klassierung, insbesondere Siebung,
und/oder bei einer gegebenenfalls nachfolgenden Zerkleinerung,
anfallendes zweites feinteilchenförmiges Eisenoxidträgermaterial als zumindest Teilmenge des ersten feinteilchenförmigen Eisenoxidträgermaterials (3) verwendet wird.

2. Verfahren nach Anspruch 1, **dadurch gekennzeichnet, dass** zumindest ein Teil des in dem Wirbelschichtreduktionsverfahren erhaltenen feinteilchenförmigen Wirbelschichtreduktionsproduktes einer Endreduktion und Aufschmelzen zu flüssigem Roheisen unterzogen wird.

3. Verfahren nach Anspruch 1, **dadurch gekennzeichnet, dass** zumindest ein Teil des in dem Wirbelschichtreduktionsverfahren erhaltenen feinteilchenförmigen Wirbelschichtreduktionsproduktes einer Kompaktierung zu einem Kompaktierungsprodukt unterzogen wird,
und gegebenenfalls
zumindest ein Teil des Kompaktierungsproduktes einer Endreduktion und Aufschmelzen zu flüssigem Roheisen unterzogen wird
und/oder, zumindest ein Teil des Kompaktierungsproduktes als stückiges Eisenoxidträgermaterial (24) dem Festbett-Direktreduktionsverfahren zugeführt wird

4. Verfahren nach einem der Ansprüche 1 bis 3, **dadurch gekennzeichnet, dass** der Eisenschwamm einer Klassierung, insbesondere Siebung, unterzogen wird,
und zumindest eine Teilmenge eines bei dieser Klassierung, insbesondere Siebung, und/oder bei einer gegebenenfalls nachfolgenden Zerkleinerung, anfallenden dritten feinteilchenförmigen Eisenoxidträgermaterials (33)
als Teilmenge des ersten feinteilchenförmigen Eisenoxidträgermaterials (3) verwendet wird.

5. Verfahren nach einem der Ansprüche 1 bis 4, **dadurch gekennzeichnet, dass** der Eisenschwamm einer Klassierung, insbesondere Siebung, unterzogen wird,
und der Eisenschwamm
und/oder zumindest eine Teilmenge eines bei dieser Klassierung, insbesondere Siebung, und/oder bei einer gegebenenfalls nachfolgenden Zerkleinerung, anfallenden dritten feinteilchenförmigen Eisenoxidträgermaterials (33),
gegebenenfalls zusammen mit
dem Wirbelschichtreduktionsprodukt
und/oder Kompaktierungsprodukt,
einer Endreduktion und Aufschmelzen zu flüssigem Roheisen unterzogen wird.

6. Verfahren nach Anspruch 5, **dadurch gekennzeichnet, dass** das dritte feinteilchenförmige Eisenoxidträgermaterial (33) kompaktiert wird, bevor es der Endreduktion und Aufschmelzen zu flüssigem Roheisen unterzogen wird.

7. Verfahren nach einem der Ansprüche 2 bis 6, **dadurch gekennzeichnet, dass** das erste Reduktionsgas aus einem bei Endreduktion und Aufschmelzen des Wirbelschichtreduktionsproduktes und/oder des Kompaktierungsproduktes und/oder des Eisenschwammes und/oder zumindest einer Teilmenge des, gegebenenfalls kompaktierten, dritten feinteilchenförmigen Eisenoxidträgermaterials (33) zu flüssigem Roheisen in einem Einschmelzvergaser (7) hergestellten Generatorgas hergestellt wird.

8. Verfahren nach einem der Ansprüche 1 bis 7, **dadurch gekennzeichnet, dass** das zweite Reduktionsgas hergestellt wird unter Nutzung eines bei dem Wirbelschichtreduktionsverfahren anfallenden Offgases und/oder Topgases und/oder einer Teilmenge des Generatorgases.

9. Vorrichtung zur Durchführung des erfindungsgemäßen Verfahrens,
umfassend eine Wirbelschichtreduktionsvorrichtung (1),
eine Zugabevorrichtung (2) zur Zugabe von erstem feinteilchenförmigem Eisenoxidträgermaterial (3) in die Wirbelschichtreduktionsvorrichtung (1),
eine erste Reduktionsgaszugabeleitung (4) zur Zugabe eines ersten Reduktionsgases in die Wirbelschichtreduktionsvorrichtung (1),
eine Festbett-Direktreduktionsvorrichtung (12),
eine zweite Reduktionsgaszugabeleitung (13) zur Zugabe eines zweiten Reduktionsgases in die Festbett-Direktreduktionsvorrichtung (12),
eine Klassierungsvorrichtung zur Klassierung von Eisenoxidträgerausgangsmaterial (22), gegebenenfalls eine Zerkleinerungsvorrichtung zur Zerkleinerung von aus der Klassierungsvorrichtung nach Klassierung entnommenem Eisenoxidträgermaterial,
eine Zugabevorrichtung (27) zur Zugabe von bei der Klassierung erhaltenem stückigem Eisenoxidträgermaterial in die Festbett-Direktreduktionsvorrichtung (12),
sowie eine Zufuhrvorrichtung (26) zur Zufuhr von bei der Klassierung und/oder bei der Zerkleinerung anfallendem zweitem feinteilchenförmigem Eisenoxidträgermaterial in die Zugabevorrichtung (2) zur Zugabe von erstem feinteilchenförmigem Eisenoxidträgermaterial und/oder in die Wirbelschichtreduktionsvorrichtung (1).

10. Vorrichtung nach Anspruch 9, auch umfassend
eine Vorrichtung zu Endreduktion und Aufschmelzen zu flüssigem Roheisen zumindest eines Teiles des in dem Wirbelschichtreduktionsverfahren erhaltenen feinteilchenförmigen Wirbelschichtreduktionsproduktes,
sowie eine Einrichtung zur Zufuhr von in dem Wirbelschichtreduktionsverfahren erhaltenen feinteilchenförmigen Wirbelschichtreduktionsprodukt in die Vorrichtung zu Endreduktion und Aufschmelzen zu flüssigem Roheisen zumindest eines Teiles des in dem Wirbelschichtreduktionsverfahren erhaltenen feinteilchenförmigen Wirbelschichtreduktionsproduktes.

11. Vorrichtung nach Anspruch 9 oder 10, auch umfassend eine Kompaktierungsvorrichtung zur Kompaktierung zumindest eines Teiles des in dem Wirbelschichtreduktionsverfahren erhaltenen feinteilchenförmigen Wirbelschichtreduktionsproduktes zu einem Kompaktierungsprodukt.

12. Vorrichtung nach einem der Ansprüche 9 bis 11 auch umfassend eine Vorrichtung zu Endreduktion und Aufschmelzen zu flüssigem Roheisen
zumindest eines Teiles des Kompaktierungsproduktes
sowie eine Einrichtung zur Zufuhr von Kompaktierungsprodukt in die Vorrichtung zu Endreduktion und Aufschmelzen zu flüssigem Roheisen zumindest eines Teiles des Kompaktierungsproduktes.

13. Vorrichtung nach einem der Ansprüche 9 bis 12, auch umfassend eine Zufuhrvorrichtung zur Zufuhr von Kompaktierungsprodukt in
die Zugabevorrichtung (27) zur Zugabe von bei der Klassierung erhaltenem stückigem Eisenoxidträgermaterial in die Festbett-Direktreduktionsvorrichtung (12)
und/oder
die Festbett-Direktreduktionsvorrichtung (12).

14. Vorrichtung nach einem der Ansprüche 9 bis 13, auch umfassend eine
Vorrichtung (31) zur Klassierung des aus der Festbett-Direktreduktionsvorrichtung erhaltenen Eisenschwammes,
sowie gegebenenfalls eine Zerkleinerungsvorrichtung (28,29) zur Zerkleinerung von aus der Vorrichtung zur Klassierung nach Klassierung entnommenem Eisenschwamm, sowie eine Zufuhrvorrichtung zur Zufuhr von bei der Klassierung und/oder bei der Zerkleinerung anfallendem drittem feinteilchenförmigen Eisenoxidträgermaterial in die Zugabevorrichtung von erstem feinteilchenförmigem Eisenoxidträgermaterial und/oder in die Wirbelschichtreduktionsvorrichtung.

15. Vorrichtung nach einem der Ansprüche 9 bis 14, auch umfassend eine Zugabevorrichtung zur Zugabe von Eisenschwamm in die
Vorrichtung zu Endreduktion und Aufschmelzen zu flüssigem Roheisen zumindest eines Teiles des in dem Wirbelschichtreduktionsverfahren erhaltenen feinteilchenförmigen Wirbelschichtreduktionsproduktes,
und/oder in die
Vorrichtung zu Endreduktion und Aufschmelzen zu flüssigem Roheisen zumindest eines Teiles des Kompaktierungsproduktes.

16. Vorrichtung nach einem der Ansprüche 9 bis 15, auch umfassend eine Vorrichtung zur Klassierung des aus der Festbett-Direktreduktionsvorrichtung erhaltenen Eisenschwammes,
sowie gegebenenfalls eine Zerkleinerungsvorrichtung zur Zerkleinerung von aus der Vorrichtung zur Klassierung nach Klassierung entnommenem Eisenschwamm,
und eine Zugabevorrichtung zur Zugabe von zumindest einer Teilmenge des bei der Klassierung und/oder der gegebenenfalls nachfolgenden Zerkleinerung, anfallenden dritten feinteilchenförmigen Eisenoxidträgermaterials
in die
Vorrichtung zu Endreduktion und Aufschmelzen zu flüssigem Roheisen zumindest eines Teiles des in dem Wirbelschichtreduktionsverfahren erhaltenen feinteilchenförmigen Wirbelschichtreduktionsproduktes
und/oder in die
Vorrichtung zu Endreduktion und Aufschmelzen zu flüssigem Roheisen zumindest eines Teiles des Kompaktierungsproduktes.

17. Stahlvorprodukt oder Stahl, hergestellt aus einem Produkt des Verfahrens nach einem der Ansprüche 1 bis 8.
